# EUROPÄISCHE PATENTSCHRIFT

(11) **EP 3 297 939 B1**
(45) Veröffentlichungstag und Bekanntmachung des Hinweises auf die Patenterteilung: **13.03.2019**
(21) Anmeldenummer: 16720858.6
(22) Anmeldetag: 09.05.2016
(51) Int. Cl.: B65G 43/02

(54) **VORRICHTUNG ZUR GURTRISSÜBERWACHUNG BEI EINEM FÖRDERBAND**
DEVICE FOR MONITORING A BELT TEAR IN A CONVEYOR BELT
DISPOSITIF DE SURVEILLANCE DES RUPTURES DE BANDE DANS UNE BANDE TRANSPORTEUSE

(30) Priorität: 21.05.2015 DE 102015209357
(43) Veröffentlichungstag der Anmeldung: 28.03.2018
(73) Patentinhaber: IFM Electronic GmbH, 45128 Essen (DE)
(72) Erfinder: HOPP, Hansjörg, 58454 Witten (DE); DU PLESSIS, Conrad Marius, 1559 Springs (ZA)
(86) Internationale Anmeldenummer: PCT/EP2016/060261
(87) Internationale Veröffentlichungsnummer: WO 2016/184707

(56) Entgegenhaltungen:
- DD-A1- 91 443
- DE-A1- 10 221 878
- DE-U1- 8 900 370
- US-A- 4 462 523

## Beschreibung

Die Erfindung betrifft eine Vorrichtung zur Gurtrissüberwachung an einem Förderband gemäß dem Oberbegriff des Patentanspruchs 1. Die Vorrichtung ist zur Überwachung langer Förderstrecken geeignet, wie sie im Bergbau, insbesondere im Tagebau, vorkommen.

Bei diesen Förderstrecken von mehreren hundert Metern, oder sogar im Kilometerbereich ist eine effiziente und kostengünstige Überwachung auf Längsrisse von großer Bedeutung.

Eine bekannte Überwachungseinrichtung weist unter dem Fördergurt quer zur Förderrichtung angeordnete Stahlseile auf, die mit je einem mechanischen Grenzlastschalter verbunden sind. DD 91 443 A1 offenbart eine solche Anordnung zur Erkennung eines Gurtrisses gemäß dem Oberbegriff des Anspruchs 1.

Als nachteilig werden die bei eng anliegenden Stahlseilen auftretenden Reibungsverluste und die bei größerem Abstand zwischen Stahlseil und Fördergurt verspätete Erkennung sich gerade ausbildender Risse empfunden.

Ein weiteres Problem ist die mangelhafte Wetterfestigkeit der verwendeten mechanischen Grenzlastschalter.

Die DE 10 221 878 A1 zeigt einen Sensor, der prinzipiell als Ersatz für den mechanischen Grenzlastschalter geeignet wäre. Er ist jedoch kompliziert aufgebaut und seine Herstellung in vergleichsweise kleiner Stückzahlen teuer.

Die Aufgabe der Erfindung besteht darin, sich im Fördergurt ausbildende Längs- und auch Querrisse schnell zu erkennen und die Reibungsverluste am Fördergurt zu minimieren. Darüber hinaus soll die die Zuverlässigkeit, insbesondere die Wetterfestigkeit der Anordnung verbessert werden.

Diese Aufgabe wird entsprechend dem Kennzeichen des Patentanspruchs 1 gelöst. Die Unteransprüche betreffen die vorteilhafte Ausgestaltung der Erfindung.

Der wesentliche Erfindungsgedanke besteht darin, das Stahlseil durch eine Kette zu ersetzen. In einer vorteilhaften Ausgestaltung wird der mechanische Grenzlastschalter durch einen an sich bekannten induktiven Grenzlastschalter ersetzt, der erfindungsgemäß einen induktiven, sicheren oder nicht sicheren Näherungsschalter enthält, der als Massenprodukt sehr preiswert herstellbar und leicht erhältlich ist.

Die Kette verbindet die Vorteile eines dünnen Stahlseils mit der Stabilität eines stärkeren Stahlseils.

Durch ihr Gewicht hängt die Kette stets ausreichend durch, so dass ein nahezu konstantes Spaltmaß zwischen der Unterseite des Fördergurtes und der als Auslöser wirkenden Kette entsteht. Weiterhin weist die Kette eine hohe Reißfestigkeit auf.

Bei einem mechanischen Kontakt des Auslösers mit der Unterseite des Fördergurtes sind die Reibungsverluste mit den Kettengliedern deutlich geringer als bei einem Stahlseil.

Die Erfindung wird anhand der Zeichnung näher erläutert.
Fig. 1 zeigt den Stand der Technik mit einem Stahlseil als Auslöser und einem mechanischen Grenzlastschalter,
Fig. 2 zeigt die erfindungsgemäße Anordnung mit einer Kette als Auslöser und einem optional induktiven Grenzlastschalter,
Fig. 3 zeigt eine Anordnung zur Signalauswertung und zur Meldung eines Gurtrisses,
Fig. 4 zeigt den Grenzlastschalter erfindungsgemäß mit einem induktiven Näherungsschalter.

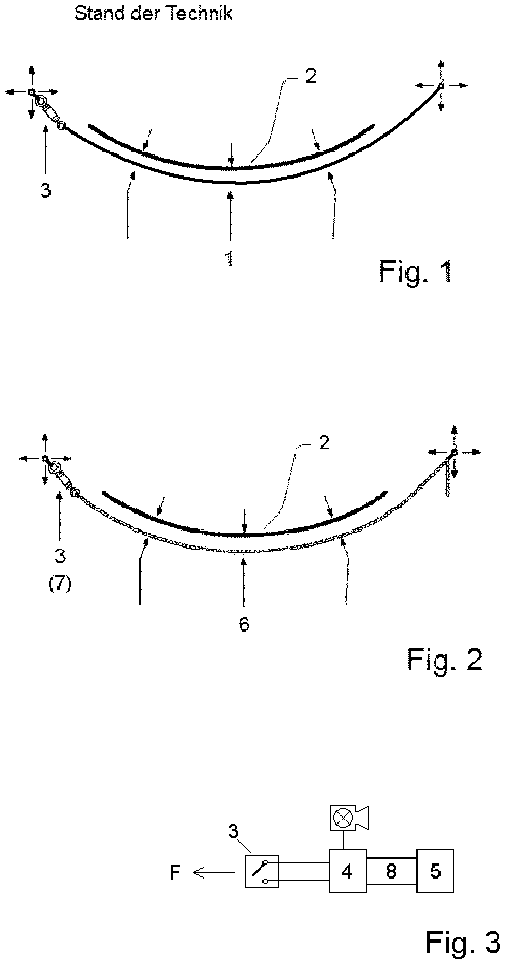

Die Fig. 1 zeigt den Stand der Technik mit einem unterhalb des Fördergurtes 2 quer zur Förderrichtung angeordnetem einem Stahlseil als Auslöser 1 und mit einem mechanischem Grenzlastschalter 3.

Die Fig. 2 zeigt die erfindungsgemäße Überwachungseinrichtung mit einer Kette 6 als Auslöser 1, wobei der Grenzlastschalter 3 gemäß einer vorteilhaften Ausgestaltung der Erfindung einen induktiven Näherungsschalter 7 aufweisen kann.

Die Fig. 3 zeigt eine Anordnung zur Signalauswertung und zur Meldung eines Gurtrisses, wobei eine von dem hier nicht dargestellten Auslöser 1 übertragene Kraft F den Grenzlastschalter 3 öffnet.

Eine Meldeeinrichtung 4, beispielsweise eine Speicherprogrammierbare Steuerung (SPS) mit einem Mikrocontroller, löst mit der dargestellten Sirene ein Warnsignal aus und meldet den Vorgang an eine übergeordnete Steuereinheit 5. Das kann über Feldbus 8 geschehen, der hier als Aktuator-Sensor-Interface (AS-i) ausgeführt ist, wobei beide AS-i-Busteilnehmer sind.

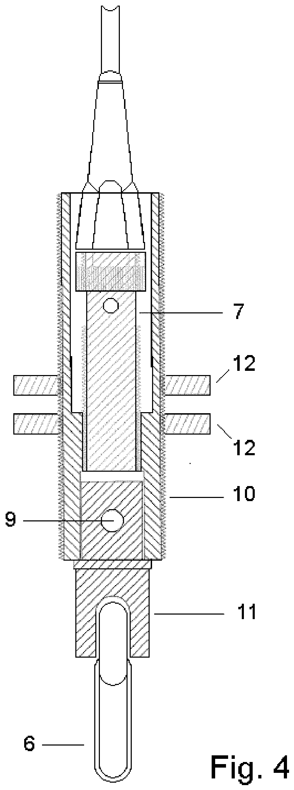

Die Fig. 4 zeigt den Grenzlastschalter 3 mit einem induktiven Näherungsschalter (7) im Schnitt. Die erfindungsgemäß als Auslöser 1 wirkende Kette 6 ist an einem Gegenstück 11 befestigt, das mittels einer Federkugel 9 in einer Hülse 10 gehalten wird. Die Frontseite des aus Metall bestehenden Gegenstücks 11 liegt an der Sensorfläche eines in die Hülse 10 eingeschraubten induktiven Näherungsschalters 7. Die Hülse 10 weist ein Außengewinde auf und kann mit Befestigungsmuttern 12 fixiert werden.

Bei einem Riss im Fördergurt 2 erhöht sich die in der vorhergehenden Figur 3 dargestellte Kraft F auf die Kette 6, so dass die Federkugel 9 nachgibt, und das Gegenstück 11 aus der Hülse 10 gezogen wird. Somit verlässt das Gegenstück 11 den Überwachungsbereich des Näherungsschalters 7, was dieser erkennt über sein Anschlusskabel an die in der Fig. 3 dargestellte Meldeeinrichtung 4 weitergibt und so die oben beschriebenen Vorgänge auslöst. Bei der Federkugel 9 handelt es sich um die bekannte Anordnung, bei der eine mit Federkraft von einer Federzunge oder einer Spiralfeder vorgespannte Stahlkugel, in eine Öffnung oder in eine Aussparung der Hülse 10 gedrückt wird.

### Bezugszeichenliste

- 1: Auslöser
- 2: Fördergurt
- 3: Grenzlastschalter
- 4: Meldeeinrichtung (Busteilnehmer)
- 5: Übergeordnete Steuereinheit
- 6: Kette (Auslöser)
- 7: Induktiver Näherungsschalter
- 8: Aktuator Sensor Interface (Feldbussystem)
- 9: Federkugel
- 10: Hülse
- 11: Gegenstück
- 12: Befestigungsmutter

## Patentansprüche

1. Anordnung zur Erkennung eines Gurtrisses bei einem Förderband mit einem Auslöser (1) der quer zur Förderrichtung unterhalb des Fördergurtes (2) angeordnet ist und der mit einem Grenzlastschalter (3) verbunden ist, sowie einer Meldeeinrichtung (4) zur Anzeige und/oder zur Meldung eines Gurtrisses an eine übergeordnete Steuereinheit (5), **dadurch gekennzeichnet, dass** der Auslöser (1) eine unter dem Fördergurt (2) hängende Kette (6) aufweist, welche bei einem Gurtriss auftretende erhöhte Kräfte zum Grenzlastschalter (3) überträgt.

2. Anordnung zur Erkennung eines Gurtrisses bei einem Förderband nach Anspruch 1, **dadurch gekennzeichnet, dass** der Grenzlastschalter (3) einen induktiven Näherungsschalter (7) aufweist, der mit der unter dem Fördergurt (2) hängenden Kette (6) verbunden ist.

3. Anordnung zur Erkennung eines Gurtrisses nach Anspruch 1 oder 2, **dadurch gekennzeichnet, dass** die Meldeeinrichtung (4) ein Aktuator-Sensor-Interface (8) aufweist.

4. Anordnung zur Erkennung eines Gurtrisses bei einem Förderband nach Anspruch 2, **dadurch gekennzeichnet, dass** der Grenzlastschalter eine Federkugel (9) aufweist.

5. Anordnung gemäß Anspruch 2 zur Erkennung eines Gurtrisses in einem Förderband mit einem induktiven Näherungsschalter (7) im Grenzlastschalter (3) und einer Kette (6) als Auslöser (1), wobei die Meldeeinrichtung (4) und die Steuereinheit (5) Busteilnehmer in einem Aktuator- Sensor-Interface (8) sind.

## Claims

1. Arrangement for detecting a belt tear in a conveyor belt, having a trigger (1) which is arranged underneath the conveyor belt (2), transversely to the conveying direction, and which is connected to a load limit switch (3), and a reporting device (4) for indicating and/or for reporting a belt tear to a higher-order control unit (5), **characterized in that** the trigger (1) has a chain (6) suspended under the conveyor belt (2), which transmits the forces occurring in the event of a belt tear to the load limit switch (3).

2. Arrangement for detecting a belt tear in a conveyor belt according to Claim 1, **characterized in that** the load limit switch (3) has an inductive proximity switch (7), which is connected to a chain (6) suspended under the conveyor belt (2).

3. Arrangement for detecting a belt tear according to Claim 1 or 2, **characterized in that** the reporting device (4) has an actuator-sensor interface (8).

4. Arrangement for detecting a belt tear in a conveyor belt according to Claim 2, **characterized in that** the load limit switch has a spring ball (9) .

5. Bus participant in an actuator-sensor interface (8) for detecting a belt tear in a conveyor belt having an inductive proximity switch (7) in the load limit switch (3) and a chain (6) as trigger (1) according to Claim 2.

## Revendications

1. Arrangement pour reconnaître une rupture de bande au niveau d'une bande transporteuse, comprenant un élément déclencheur (1) qui est disposé transversalement au sens de transport au-dessous de la bande transporteuse (2) et qui est relié à un contact de charge limite (3), ainsi qu'un dispositif de signalisation (4) destiné à indiquer et/ou à signaler une rupture de bande à une unité de commande (5) de niveau supérieur, **caractérisé en ce que** l'élément déclencheur (1) possède une chaîne (6) suspendue au-dessous de la bande transporteuse (2), laquelle transmet au contact de charge limite (3) les forces qui se produisent lors d'une rupture de bande.

2. Arrangement pour reconnaître une rupture de bande au niveau d'une bande transporteuse selon la revendication 1, **caractérisé en ce que** le contact de charge limite (3) possède un détecteur de proximité inductif (7) qui est relié à la chaîne (6) suspendue au-dessous de la bande transporteuse (2).

3. Arrangement pour reconnaître une rupture de bande selon la revendication 1 ou 2, **caractérisé en ce que** le dispositif de signalisation (4) possède une interface actionneur-capteur (8).

4. Arrangement pour reconnaître une rupture de bande au niveau d'une bande transporteuse selon la revendication 2, **caractérisé en ce que** le contact de charge limite possède une bille à ressort (9).

5. Noeud de bus dans une interface actionneur-capteur (8) destiné à reconnaître une rupture de bande au niveau d'une bande transporteuse, comprenant un détecteur de proximité inductif (7) dans le contact de charge limite (3) et une chaîne (6) en tant qu'élément déclencheur (1) selon la revendication 2.
